# EUROPÄISCHE PATENTANMELDUNG

(11) **EP 2 357 422 A2**
(43) Veröffentlichungstag der Anmeldung: **17.08.2011**
(21) Anmeldenummer: 11001215.0
(22) Anmeldetag: 15.02.2011
(51) Int. Cl.: F24F 12/00

(54) **Verfahren und raumlufttechnische Anlage mit einem Abluftgerät und wenigstens einem Zuluftgerät**

(30) Priorität: 15.02.2011 DE 102011011297; 15.02.2010 DE 102010008080
(71) Anmelder: Hombücher, Heinz-Dieter, 63179 Obertshausen (DE)
(72) Erfinder: Hombücher, Heinz-Dieter, 63179 Obertshausen (DE)
(74) Vertreter: Stahl, Dietmar

(57) **Zusammenfassung**

Die Erfindung betrifft eine raumlufttechnische Anlage mit Abluft- und Umluftgeräten mit einem Außenluftanschluss mit Einrichtungen zur Wärmerückgewinnung aus der Abluft, die dem Anteil der Außenluft des Umluftgerätes zugeführt wird.

## Beschreibung

Die Erfindung betrifft ein Verfahren zum Betrieb einer Raumlufttechilischen Anlage mit einem Abluftgerät und Umluftgerät mit Außenluftanteil wobei der Umluftanteil nicht das Abluftgerät durchströmt, jedoch Wärmerückgewinnung für den Anteil Außenluft mit der Energie aus der Abluft betrieben werden kann, gemäß dem Oberbegriff des Anspruchs 1.

Lüftungsgeräte sind bekannt und werden zur Konditionierung der Zuluft für die verschiedenen Zwecke eingesetzt. Dabei wird häufig auch ein Anteil Umluft konditioniert in dem die Abluft das Abluftgerät zu einem Teil durchströmt und dem Zuluftgerät zugeführt und dort ebenfalls konditioniert wird Dabei kann für den Umluftanteil jedoch keine Wärmerückgewinnung betrieben werden.

Aus dem beschriebenen Stand der Technik wird viel Energie für den Betrieb der Ventilatoren aufgebracht weil der Umluftanteil zuerst durch den Abluftkanal, dem Abluftgerät, der Umluftkammer, dem Zuluftgerät und anschließend durch den Zuluftkanal transportiert werden muss. Werden dezentrale Umluftgeräte mit Außenluftanteil eingesetzt so wird entweder die Wärmerückgewinnung weggelassen oder man setzt mehrere Kompaktgeräte ein.

In diesem Zusammenhang ist aus dem DE 202009403128 U1 eine Vorrichtung zur Wärmerückgewinnung in einer Wärmeaustauscheranlage mit Energieeinkoppelung in Lüftungsgeräten bekannt. Dort ist ein Kreislaufverbundsystem mit einer Einrichtung zur Energieeinkopplung und mindestens zwei Wärmeaustauschern in einem Zulftvolmenstrom und mindestens einem Wärmeaustauscher in einem Abluftvolumentrom eines Luftbehandlungssystemsbeschrieben. Dabel sind Einrichtungen zur Bildung von Wärmeträgerkreisläufen so vorgesehen, dass der Wärmeträgerstrom für die Wärmeaustauscher variabel verschaltet werden kann. Dies erfolgt so, dass entweder alle Wärmeaustauscher als ein Kreislaufverbundsystem geschaltet werden oder dass mindestens ein Zuluftwärmeaustauscher und mindestens ein Abluftwärmeaustauscher zu einem Kreislaufverbundsystem in einem Wärmeträgerkreislauf ausgebildet werden. Mindestens ein weiterer Zuluftwärmeaustauscher ist für die weitere Erwärmung oder Kühlung der Zuluft im Zuluftvolumenstram mit einem separaten Wärmeträgerkreislauf angeordnet. Das Kreislaufverbundsystem kann mit einer integrierten Wärmepumpe für die zusätzliche Wärmerückgewinnung und zur weiteren Erwärmung bzw. Kühlung der Zuluft im Zuluftvolumenstrom versehen sein.

Aufgabe der vorliegenden Erfindung ist es ein Raumlufttechnisches System mit einem zentralen Abluftgerät und mehreren dezentralen Umluftgeräte mit Außenluftanteil, mit der Maßgabe den Ventilatorstrom zu minimieren dabei die Wärmerückgewinnung aus der Abluft zu ermöglichen.

Die Lösung der Aufgabe gestaltet sich nach den Merkmalen von Anspruch 1.

Erfindungsgemäß ist ein Außengerät mit Wärmeaustauschern für die Wärmerückgewinnung vorgesehen, wobei die Wärmeenergie mit Rohrleitungen in den Wärmeaustauschern in den Umluftgeräten für die Wärmerückgewinnung verbunden ist. Die einzelnen Umluftgeräte saugen die Raumluft separat an, konditionieren diese und blasen die Luft zusammen mit der vorkonditionierten Außenluft aus der Wärmerückgewinnung wieder in den Raum ein.

Erfindungsgemäß ist eine Raumlufttechnische Anlage mit mindestens einem Abluftgerät und mindestens einem Umluftgerät mit Außenluftanteil vorgesehen, welche mit Rohrleitungen für die Wärmerückgewinnung miteinander verbunden sind. Der Außenluftanteil wird durch einen Luftkanal angesaugt und mit dem Wärmeaustauscher der Wärmerückgewinnung vorkonditioniert. Der Raumluftanteil wird separat angesaugt und anschließend mit der Außenluft zusammen vom Ventilator angesaugt. Nach dem Ventilator ist mindestens ein Wärmeaustauscher für die Kühlung oder Erwärmung der Umluft vorhanden.

Die Erfindung gestaltet sich in bevorzugter Bauweise in Form eines Umluftgerätes mit Motorlüfterrad der die an der Luftaustrittseite angeordneten Wärmeaustauscher durchströmt durch welche die Luft gekühlt oder erwärmt wird. Auf der Saugseite befindet sich die Mischkammer in welcher zu einem die durch die Wärmerückgewinnung konditionierte Luft und zum anderem die Raumluft gemischt wird, Dabei kann die austretende Luft auch durch kurze Luftkanalnetze geführt werden.

Die Ausgestaltung der Umluftgeräte kann den jeweiligen Erfordernissen angepasst werden:
1. mit Filterung der Raumluft
2. ohne Filterung der Raumluft
3. mit Filterung der Außenluft
4. ohne Filterung der Außenluft
5. mit automatischer Regelung des Außenluftanteils
6. mit starrem Außenluft und Raumluftanteil

Die Wärmerückgewinnung erfolgt bevorzugt durch ein Kreislaufverbundsystem, indem in das Abluftgerät ein oder mehrere Lamellenwärmeaustauscher für die Wärmerückgewinnung aus der Abluft eingebaut werden, die dann über ein Rohrleitungssystem die zurück gewonnene Energie an den Außenluftanteil der Umluftgeräte übertragen. Dabei kann auch eine zweistufige Wärmerückgewinnung mit multifunktionalem Kreizlaufverbundsystem mit integrierter Wärmepumpe eingesetzt werden. Ebenfalls kann die Erwärmung der Umluft mit einer Wärmepumpe erfolgen.

Die mit der Erfindung erzielbaren Vorteile bestehen unter anderem in den im Folgenden beschriebenen vorteilhaften Wirkungen:
a) Die aus der Abluft zurück gewonnene Energie kann an den Außenluftanteil des Umluftgerätes übertragen werden
b) Der Ventilatorstrom wird gegenüber dem Betrieb mit Zu- und Abluftgerät erheblich weniger.
c) Der Aufwand des Lüftungskanalsystems kann erheblich vermindert werden bzw. ganz entfallen.
d) Der Montageaufwand wird minimiert

Ein Ausführungsbeispiel der Erfindung ist im Folgenden anhand von Zeichnungen beispielhaft dargestellt. Dabei zeigen
- Figur 1: den bevorzugte Aufbau des Außengerätes,
- Figur 2: den bevorzugte Aufbau des Umluftgetätes,
- Figur 3: die bevorzugte Aufteilung der Luftvolumenströme im Umluftgerät,
- Figur 4: die bevorzugte Anordnung des Außengerätes und der Umluftgeräte mit den verbindenden Rohrleitungen und
- Figur 5: ein Außengerät mit Wärmepumpe.

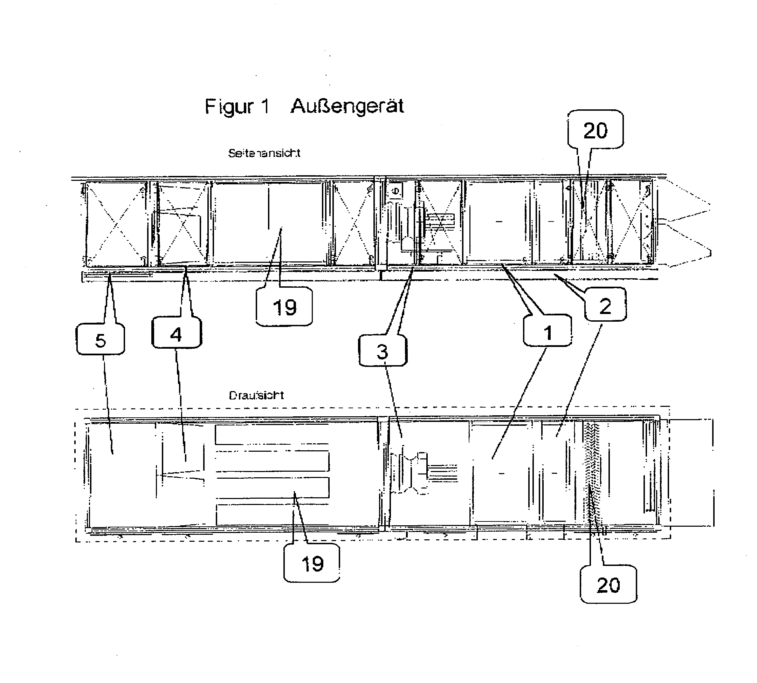

In Figur 1 ist eine erfindungsgemäße Anordnung eines Abluftgerätes mit Wärmeaustauscher 1 für die Wärmerückgewinnung mit einem Kreistaufverbundsystem und Wärmeaustauscher 2 für die Erweiterung der Wärmerückgewinnung als zweistufige Wärmerückgewinnung mit Wärmepumpe und Kreislaufverbundsystem.
Zentral sind ein Wärmeaustauscher 1 für das Kreislaufverbundsystem KVS und ein Wärmeaustauscher 2 für die zweite Stufe der Wärmepumpe WP zur Wärmerückgewinnung angeordnet. Dem Wärmetauscher 1 ist ein Abluftventilator 3 zugeordnet, der den Volumenstrom von einem Ansaugstutzen 5 über ein Abluftfilter 4 ansaugt.
Weiterhin ist dem Abluftventilator 3 ein Schalldämpfer 19 zugeordnet. Dem Wärmeaustauscher 2 ist ein Tropfenabscheider 20 nachgeordnet.

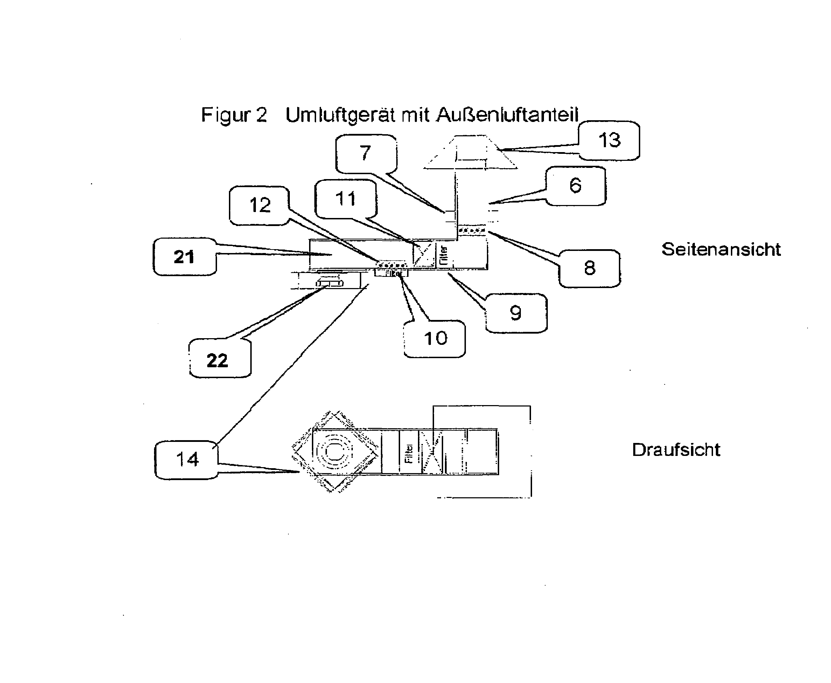

In Figur 2 ist eine erfindungsgemäße Anordnung eines Umluftgerätes UM mit einem Anschluss 6, einer Dachdurchführung 7 und einer Ansaughaube 13 für einen Außenluftanteil dargestellt. Mit einer Außenluftbeimischklappe 8, sowie einer Raumluftklappe 12 wird das Verhältnis zwischen Außenluft und Umluft eingestellt. Ein Filter 9 ist ein höherwertiger Filter für die Reinigung des Außenluftanteils, ein weiterer Filter 10 ist von einfacher Qualität und filtert die Raumluft, die durch die Raumluftklappe 12 in eine Mischkammer 21 eintritt. Der Mischkammer 21 ist zum Anschluss 6 hin ein Wärmetauscher 11 für die Wärmrückgewinnung zugeordnet. Ein Umluftventilator 22 saugt die Umluft und die Außenluft aus der Mischkammer 21 an und fördert diese über den Wärmeaustauscher 14 weiter.

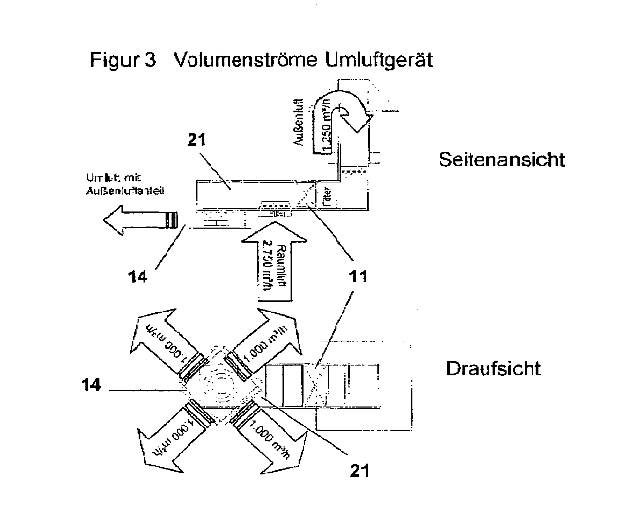

In Figur 3 ist eine erfindungsgemäße Anordnung der Luftvolumenströme eines Umluftgerätes UM dargestellt. Dabei sind beispielhaft in einer Anordnung gemäß Figur 2 die Mengenverhältnisse der Außenluft, der Umluft und der zurück geführten Raumluft und der Umluft mit dem Außenluftanteil aufgezeigt.

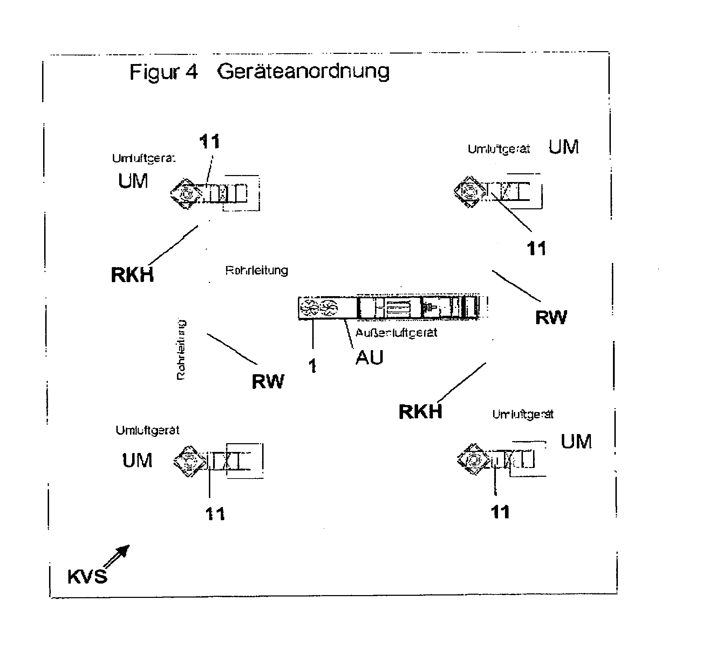

In Figur 4 ist eine erfindungsgemäße Anordnung einer Anlage mit einem Außengerät AU und vier Umluftgeräten UM dargestellt, welche mit Rohrleitungen RW für die Wärmerückgewinnung und Rohrleitungen RKH für die zusätzliche Kühlung oder Heizung der Umluft verbunden sind.
Die Verbindung für die Wärmerückgewinnung als Kreislaufverbundsystem KVS in einer Verbindung zwischen einem Umluftgerät UM und dem Außengerät AU findet ist über den Wärmeaustauscher 1 im Außengerät AU und den Wärmeaustauscher 11 im Umluftgerät UM ausgeführt.
Die Energieeinkopplung in das Kreislaufverbundsystem KVS findet mit der Wärmepumpe WP direkt in den Kreislauf statt oder in einer alternativen Anordnung mit einem zwischengeschalteten Wärmeaustauscher zwischen einem Wärmeträger für die Wärmepumpe WP und einem Wärmeträger für das Kreislaufverbundsystem.
Der Wärmeaustauscher 2 dient zur weiteren Energieübertragung an den Abluftstrom für die Wärmepumpe WP. Mit Hilfe des Wärmeaustauschers 14 kann die Luft darüber hinaus noch weiter erwärmt oder gekühlt werden. Hierfür kann Energie auch aus der Wärmepumpe WP oder einem anderen System übernommen und eingesetzt werden.

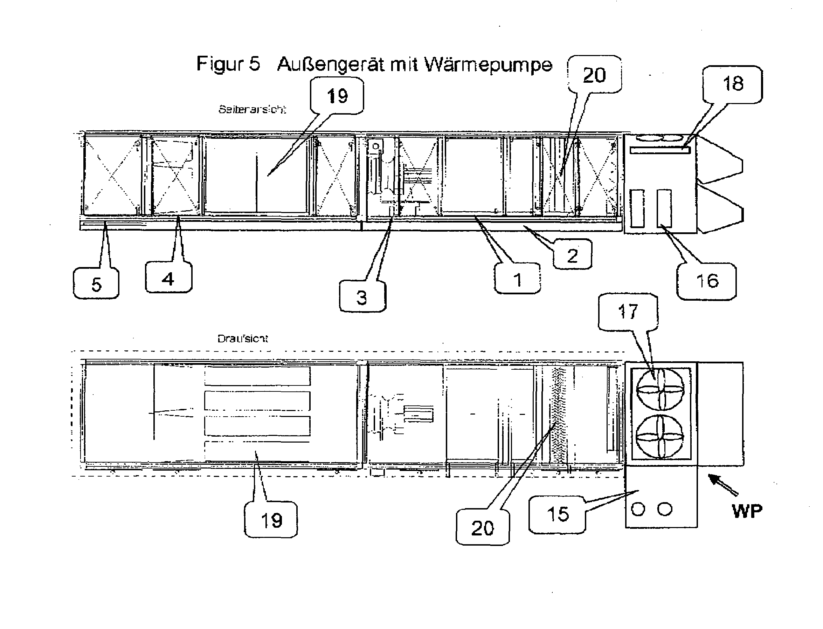

In Figur 5 ist in Ergänzung zu der Darstellung nach Figur 1 ein Außengerät A mit einer Wärmepumpe WP dargestellt. Das Außengerät A setzt sich wie folgt zusammen:
Zentral sind ein Wärmeaustauscher 1 für das Kreislaufverbundsystem KVS und ein Wärmeaustauscher 2 für die zweite Stufe der Wärmepumpe WP zur Wärmerückgewinnung angeordnet. Dem Wärmetauscher 1 ist ein Abluftventilator 3 zugeordnet, der den Volumenstrom von einem Ansaugstutzen 5 über ein Abluftfilter 4 ansaugt.
Weiterhin ist dem Abluftventilator 3 ein Schalldämpfer 19 zugeordnet. Dem Wärmeaustauscher 2 ist ein Tropfenabscheider 20 nachgeordnet.
Zusätzlich ist hier nun ein Gehäuse 15 für Kältetechnik und Wärmepumpe WP vorgesehen in dem Einbauteile 16 für die Wärmepumpe WP angeordnet sind. Weiterhin ist hier ein Außenlüfter 17 für Wärmeaustauscher mit einem Vorsatz 18 für den Außenlüfter angeordnet.

Die Funktion der erfindungsgemäßen Anordnung gestaltet sich wie folgt:
Im Heizfall wird die Abluft aus dem Raum mit dem Abluftventilator 3 über den Ansaugstutzen 5 entzogen. Die Abluft wird mit dem Abluftfilter 4 gereinigt und dem Wärmeaustauscher 1 zugeführt, mit welchem die Energie aus der Abluft entzogen wird. Anschließend wird die Energie über das Rohrleitungssystem RW, RKH mit Hilfe des Wärmeträgers dem Wärmeaustauscher 11 im Umluftgerät UM zugeführt. Über das Filter 10 im Umluftgerät UM wird dort die Raumluft angesaugt, die sich in der Mischkammer 21 mit der Außenluft mischt. Der Ventilator 22 des Umluftgerätes UM saugt die Luft aus der Mischkammer 21 und fördert die Luft über den Wärmeaustauscher 14 in den Raum. Dabei wird die Luft weiter erwärmt. Der Wärmeaustauscher 2 im Außengerät AU ist der Wärmepumpe WP zugeordnet, mit welcher zusätzlich die Energie der Abluft entzogen wird, die vom Kreislaufverbundsystem KVS der Luft nicht entzogen werden konnte. Im Kühlfall, wenn die Temperatur der Außenluft höher ist als die Temperatur der Raumluft, kann der Raumluft Energie entzogen werden und wie im Heizfall der Außenluft zugeführt werden.

### Bezugszeichen

- 1: Wärmeaustauscher für Kreislaufverbundsystem
- 2: Wärmeaustauscher für die 2. Stufe der WRG Wärmepumpe
- 3: Abluftventilator
- 4: Abluftfilter
- 5: Ansaugstutzen Abluft
- 6: Ansaugstutzen Außenluft
- 7: Dachdurchführung
- 8: Außenluftklappe
- 9: Außenluftfilter
- 10: Umluftfilter
- 11: Wärmeaustauscher Wärmerückgewinnung
- 12: Umluftventilator
- 13: Ansaughaube
- 14: Wärmeaustauscher
- 15: Gehäuse für Kältetechnik / Wärmepumpe
- 16: Einbauteile Wärmepumpe
- 17: Außenlüfter für Wärmeaustauscher
- 18: Vorsatz für Außenlüfter
- 19: Schalldämpfer
- 20: Tropfenabscheider
- 21: Mischkammer
- 22: Ventilator
- KVS: Kreislaufverbundsystem
- AU: Außensystem
- UM: Umluftsystem
- WP: Wärmepumpe

## Patentansprüche

1. Raumlufttechnische Anlage mit mindestens einem Abluftgerät (AU) und mindestens einem Umluftgerät (UM) mit Außenluftansaugung, mit welchem der Außenluftanteil vom Umluftgerät die Energie aus der Abluft über ein Kreislaufverbundsystem (KVS) ganz oder teilweise zugeführt wird.

2. Raumlufttechnische Anlage gemäß Anspruch 1 mit einer zweistufiger Wärmerückgewinnung bestehend aus Kreislaufverbundsystem (KVS) mit Wärmepumpe (WP) als zweite Stufe der Wärmerückgewinnung.

3. Raumlufttechnische Anlage gemäß Anspruch 1 oder 2 mit mehr als einem Abluftgerät (AU).

4. Raumlufttechnische Anlage gemäß Anspruch 1 bis 3 mit mehr als einem Umluftgerät (UM).

5. Raumlufttechnische Anlage gemäß Anspruch 1 bis 4 mit einem multifunktionalen Kreislaufverbundsystem (KVS).
